# EUROPEAN PATENT APPLICATION

(11) **EP 3 736 752 A1**
(43) Date of publication of application: **11.11.2020**
(21) Application number: 19173300.5
(22) Date of filing: 08.05.2019
(51) Int. Cl.: G06Q 10/06, G05B 19/19

(54) **GENERATING AN ASSEMBLY PLAN**

(71) Applicant: Siemens Aktiengesellschaft, 80333 München (DE)
(72) Inventor: Krause, Stefan, 04177 Leipzig (DE); Lipp, Christian, 94065 Waldkirchen (DE); Meyer-Hentschel, Michael Johannes, 66133 Saarbrücken (DE); Nowitschkow, Alexander, 81739 München (DE); Robl, Peter, 94133 Röhrnbach (DE)

(57) **Abstract**

The invention relates to a method for generating an assembly plan comprising manufacturing instruction to configure a manufacturing machine of a manufacturing system for manufacturing an industrial assembly. The method receives a three-dimensional assembly model that comprises feature information of the industrial assembly. The feature information may be automatically assigned to manufacturing tools, which are identified on the basis of assembly manufacturing operations. The invention further relates to a method and apparatus for generating the three-dimensional assembly model. The three-dimensional assembly is generated by linking objects of the 3D-assembly with information objects specifying the objects.

Due to the present invention, the effort for generating an assembly plan for manufacturing an industrial assembly is reduced. Moreover, a three-dimensional assembly model comprising all information for generating the assembly plan can be generated without providing 2D-assembly drawing of the industrial assembly.

## Description

The invention relates to a method for generating an assembly plan comprising manufacturing instructions to configure a manufacturing machine of a manufacturing system for manufacturing an industrial assembly and a method and a manufacturing machine for automatically generating a three-dimensional assembly model of an industrial assembly for generating the assembly plan.

Today's process for creation of assembly plans to manufacture a product of higher complexity with predefined functionalities is often carried out manually. An assembly designer, for instance, creates on the basis of an Engineering Bill of Material (EBOM), i.e., the 3D- or 2D-assembly from the engineering department a Manufacturing Bill of Material (MBOM). The MBOM also referred to as the manufacturing BOM contains all the parts and assemblies required to build a complete and shippable product. The EBOM is a type of Bill of Materials (BOM - list of raw materials) reflecting the product as designed by the engineering. The EBOM as a 2D-drawing of the assembly (2D assembly) comprises besides the representation of geometries from the assembly also further information, such as, manufacturing parameters, e.g., temperature, time information, tightening torque, dimensions, e.g. clearance, fitting information. This information can be used to manually create an assembly plan by the assembly designer. The 2D-assembly is the leading und only valid document for creating the assembly plan.

The assembly plan is usually a textual description of the individual assembly operations in a tabular form. The assembly planner describes and defines manually, which components have to be assembled, in which order, where and with which production resources/tools.

In addition, all the process parameters such as tightening torque and temperature are taken from the EBOM and stored as text in the assembly plan.

However, the traditional creation of assembly plans is very complex and time-consuming due to the high number of manual activities. Moreover, currently used assembly plans are not created under the control of a standardized process, since every assembly designer has the opportunity to add information to the assembly plan by using customized text fields. Therefore, the assembly plans are created with an individual design and information content, which cannot be used to configure automatically a manufacturing machine.

Moreover, the information added to the customized text fields in the assembly plan such as product information, process parameters, production resources/tools and instructions are not correctly back-referenced to the 3D/-2D-assembly of the EBOM. Therefore, all amendments and changes made in the 3D-EBOM have to be manually transferred to the MBOM as well as the text in the assembly plan has to be amended additionally. That in addition increases the timely effort to keep all information consistent and susceptibility to errors.

In addition to the timely effort and the susceptibility to errors, the 2D-assembly required to create an assembly plan has the disadvantage that the manufacturing parameters provided with the 2D-assembly cannot be processed automatically. An 3D-assembly has to be created from the 2D-assembly, which then can be used to create an assembly plan. However, the information provided with the 2D-assembly are not directly referenced to the 3D-assembly. Hence, when modifying information in the 2D-assembly, the 3D-assembly has also to be adapted.

Accordingly, it is an object of the present invention to provide a method for automatically providing an assembly plan using a three-dimensional assembly model and to automatically provide a three-dimensional assembly model that can be used to create the assembly plan, so that the above described disadvantages are overcome.

This object is achieved by a first aspect of the present invention by a method for generating an assembly plan comprising manufacturing instructions to configure a manufacturing machine of a manufacturing system for manufacturing an industrial assembly comprising the features of claim 1.

According to the first aspect, the invention provides a method for generating an assembly plan comprising manufacturing instructions to configure a manufacturing machine of a manufacturing system for manufacturing an industrial assembly, wherein the industrial assembly includes a plurality of objects, comprising the method steps of:
Receiving by a communication module of the manufacturing machine of the manufacturing systems a three-dimensional assembly model of an industrial assembly, wherein the three-dimensional assembly model comprises feature information of the industrial assembly;
Detecting by a processing module of the manufacturing machine assembly relevant features in a provided manufacturing bill of material, wherein the manufacturing bill of material contains the components required to manufacture the industrial assembly;
Linking by the processing module of the manufacturing machine automatically assembly manufacturing operations associated to the manufacturing machine to the detected assembly relevant features, wherein the assembly manufacturing operations are stored in an assembly manufacturing operation library provided by the manufacturing machine of the manufacturing system;
Identifying by the processing module of the manufacturing machine assembly manufacturing tools associated to the manufacturing machine from an assembly manufacturing tools library provided by the manufacturing machine on the basis of the assembly manufacturing operations linked to the detected assembly relevant features, and
Generating an assembly plan comprising the manufacturing instructions to configure the manufacturing machine of the manufacturing system for manufacturing the industrial assembly by automatically assigning the feature information from the three-dimensional assembly model to the identified assembly manufacturing tools for processing the assembly manufacturing operations.

In connection with the present invention, "assembly plan" can be understood to mean, for instance, a means that contains specific information, in particular manufacturing instructions for each assembly operation that has to be processed by the manufacturing machine, such as, mating, handling as well as testing and adjustment of the industrial assembly. The assembly plan may be created automatically and is provided in a textual description, for instance in tabular form.

Further, "manufacturing instructions" can be understood to mean, for instance, as specifications for work steps and/or manufacturing steps that cannot be expressed geometrically by the three-dimensional assembly model. The manufacturing instructions can be used, for instance, to specify surface treatments (e.g. polishing a surface or varnishing a surface) or work steps (e.g. oiling or greasing a milled thread) which, in particular, cannot be mapped as a structure or geometric structure to be manufactured.

In connection with the present invention, an "industrial assembly" can be understood to mean, for instance, a product or an object or a workpiece. For manufacturing the industrial assembly and/or for the manufacture of one or more surfaces of the industrial assembly at least one tool (e.g. a milling cutter or a drill) is required. Additionally, or alternatively one or more manufacturing machines may be necessary for the manufacturing, which is/are selected in particular on the basis of the three-dimensional assembly model and/or the manufacturing instructions included in the three-dimensional assembly model, so that the industrial assembly to be manufactured is manufactured by the manufacturing machines.

Further, a "manufacturing machine" can be understood to mean, for instance, a machine that can receive control commands according to the assembly plan and processes the manufacturing instructions included in the assembly plan. For instance, a manufacturing machine can be a milling machine, drilling machine, clueing machine, welding machine or 3D printer, adapted to manufacture the industrial assembly. A manufacturing system may comprise a plurality of manufacturing machines, wherein the manufacturing system may comprise means for selecting the corresponding manufacturing machine or manufacturing machines to manufacture the industrial assembly according to the assembly plan. In particular, several manufacturing machines may also be required for processing the manufacturing instructions, whereby the manufacturing system or the means of the manufacturing system uses the manufacturing instructions of the assembly plan to determine the necessary manufacturing machines and, if necessary, controls the manufacturing process and the sequence of processing (e.g. the sequence of processing the manufacturing instructions or the sequence of manufacturing machines processing the manufacturing instructions) of the industrial assembly to be manufactured. The manufacturing machine(s) may be connected to the manufacturing system via a communication connection and/or may connect to each other. The communication connection may comprise a wireless communication connection (e.g., WLAN, Wi-Fi, Bluetooth, NFC) and/or a wired communication connection (e.g., Ethernet, RS232, RS485). The manufacturing machine preferably comprises a manufacturing unit and a control unit. The control unit may be located externally and even outside of the manufacturing machine (with data exchange).

Further, in connection with the present invention, a "three-dimensional assembly model" can be understood to mean, for instance, a true-to-scale (digital) three-dimensional model (e.g. in the form of a CAD model) of the industrial assembly to be manufactured. The three-dimensional assembly model is in particular, a digital or virtual representation of the assembly model to be manufactured, which also includes the necessary information objects (e.g., manufacturing reference values, and/or manufacturing reference value tolerance specifications, and/or intervention tolerance value specification). For instance, one or more manufacturing machines can be determined or selected, to which the three-dimensional assembly model can be provided, so that an assembly plan can be generated to configure the corresponding manufacturing machines to manufacture the industrial assembly. The three-dimensional assembly model may include in particular the information object, which are assigned in particular to the surfaces of the three-dimensional assembly model. These surfaces can be used, for instance, to define the structures to be manufactured (e.g. bores, cut-outs, bulges, clue-, screw-, rivet-, or weld connections) and their size and position on the industrial assembly to be manufactured. In other words, structures to be manufactured (e.g. geometric structures) are specified or defined (e.g. by information objects) in particular by the three-dimensional assembly model during the manufacturing of the industrial assembly. Hence, the three-dimensional assembly model is, for instance, a data set or a data structure that includes, for instance, geometric data and manufacturing data for manufacturing an industrial assembly. The three-dimensional assembly model is thus a three-dimensional/virtual representation of the industrial object to be manufactured that is used to perform a manufacturing process for manufacturing the industrial assembly.

The three-dimensional assembly model may be designed as a three-dimensional CAD-assembly model. A CAD-assembly model allows a realistic representation and an improved spatial representation of an object during and after the modelling process. Further, certain representation-related, document-related, and technical-visual representations can be automated or even partially automated by the system through the three-dimensionality.

The three-dimensional assembly model can be stored in a database, database system, and/or distributed database. The feature information of the three-dimensional assembly model comprises the objects and the information objects. The object of the three-dimensional assembly model may include an element (e.g., screw) of the industrial assembly. The information object may include an element information of the element. For instance, the object specifies a screw. The corresponding information object specifies, for instance, a screw diameter and/or the tightening torque.

In connection with the invention, "manufacturing reference values" can be understood as, for instance, exact dimensions of the object of an industrial assembly and/or measurable properties of the object of an industrial assembly and/or measurable quantities (e.g. of the structures of the industrial assembly) while processing the manufacturing instructions. The manufacturing reference values can be, for instance, theoretically exact dimensions such as thread specifications or these values are included in the manufacturing reference values. The manufacturing reference values are preferably assigned directly to the surfaces and/or structures of the three-dimensional assembly model. The manufacturing reference are preferably used to specify the structures to be manufactured on a workpiece (e.g. milled projections or holes) so that, in particular, the industrial assembly can be manufactured. By means of the manufacturing instructions, surface treatments (e.g. polishing a surface or painting a surface) or work steps (e.g. oiling or greasing a milled thread) can also be specified, which in particular cannot be mapped as a structure or geometric structure. The manufacturing reference values can, for instance, also be realized as a three-dimensional (virtual/digital) image (or three-dimensional geometry), e.g. with corresponding three-dimensional coordinates.

Manufacturing reference value tolerance specification can be understood in connection with the invention, for instance, as deviations from manufacturing reference values up to which the manufactured industrial assembly is accepted. The manufacturing reference value tolerance specification can include for instance dimensional tolerances, shape and position tolerances or surface specifications, or these corresponding values are covered by the manufacturing tolerance values respectively. If, for instance, a manufacturing reference value tolerance specification is exceeded, the corresponding finished industrial assembly can be rejected and declared as scrap. Accordingly, a manufacturing reference value tolerance specification indicates, for instance, a threshold value dependent on a corresponding manufacturing reference value, which is exceeded if the industrial assembly to be finished is discarded.

In connection with the invention, "intervention tolerance value specification" can be understood to mean, for instance, deviations from manufacturing reference values when exceeded the industrial assembly to be manufactured is still accepted (i.e. not rejected), but nevertheless the manufacturing tool and/or the manufacturing machine can be automatically checked and/or replaced. This avoids in particular that, for instance, the manufacturing reference value tolerance specification of the industrial assembly to be subsequently manufactured are exceeded. The intervention tolerance value specification can be, for instance, dimensional tolerances and/or shape and position tolerances and/or surface specifications, which for instance are specified/calculated as relative/percentage values of the manufacturing reference value tolerance specification (less than 100%).

Further, in connection with the present invention, a "manufacturing operation" can be understood to mean, for instance, an operation that a manufacturing machine can perform to manufacture the industrial assembly. For instance, the manufacturing machine can comprise a drill tool (manufacturing tool) to perform the manufacturing operation "drilling".

Further, in connection with the present invention, the "assembly manufacturing operation library" and "assembly manufacturing tools library" can be, for instance, implemented as a database and/or database system that is provided by the manufacturing machine or manufacturing system or that is provided by a computer system that is connected to the manufacturing machine and/or manufacturing system. For instance, a SQL database or Oracle database can be used to store the assembly manufacturing operation library and assembly manufacturing tools library. Advantageously, by using a database, great amount of information and data can be efficiently, consistently, and permanently stored and adequately provided according to given requirements. The assembly manufacturing operation library, for instance, comprises the manufacturing operations that can be provided by the manufacturing machine. The required manufacturing operations to generate the assembly plan for manufacturing the industrial assembly are generated by using the information provided within the three-dimensional assembly model. The assembly manufacturing tools library, for instance, comprises the tools required for manufacturing the industrial assembly and is provided, respectively, defined by the manufacturing machine.

An advantage of the method for generating an assembly plan according to the present invention results in that it is possible to generate an assembly plan in a more efficient and expeditiously way with less effort for creating separately the manufacturing instructions. The assembly plan can be automatically generated and used to configure a manufacturing machine by deriving control commands for the manufacturing machine from the assembly plan. No further steps or a human processing are necessary to transform the assembly plan for using it with a manufacturing machine.

In addition, the present invention allows a standardizing of the assembly plan that increases the quality of data included and decreases the error-proneness of information and/or manufacturing instructions of the assembly plan.

In a possible embodiment, the three-dimensional assembly model comprises the plurality of objects of the industrial assembly and at least one information object associated to the at least one object of the plurality of objects of the industrial assembly. In this way, advantageously, the content of 2D-drawings such as the components of the assembly as well as dimensions (e.g. clearance, fitting information), tolerances, surface details of the components, notes or any other form of assembly information can be stored as objects and/or information object in the three-dimensional model. The objects and information objects are directly linked to the respective references surfaces of the assembly and can therefore be used automatically for generating an assembly plan.

In a further possible embodiment, the at least one information object is directly linked to at least one object of the plurality of objects of the industrial assembly. In this way, advantageously, the relation between the object defining a component of the industrial assembly and the information object including information describing the object is given. The relation enables an automatic verification of all provided information and the creation of an assembly plan.

In a further possible embodiment, the information object is directly linked to the surface of the object of the industrial assembly. In this way, advantageously, the information object is directly referenced to a specific surface of the object and specifies that object more detailed and efficiently. A manufacturing instruction for this specific surface of the object from the industrial assembly can derived and added to an assembly plan.

In a further possible embodiment, the information object comprises at least one attribute. In a further possible embodiment, the attribute of the information object comprises a reference information to the at least one object of the plurality of objects of the industrial assembly associated to said information object. In a further possible embodiment, the attribute of the information object comprises information of the industrial assembly and/or process parameters and/or construction parameters of the industrial assembly. In this way, advantageously, the information describing an object can be provided and stored in a structured manner. For instance, an attribute can comprise a reference id that references to the corresponding surface. Furthermore, attributes can be added comprising notes, material specifications, manufacturing information, manufacturing tool information. This exemplary listing does not represent a limitation for the use of the attributes in the present invention. Moreover, further attributes are conceivable. For instance, an information object comprising a pressure for riveting is directly linked to a rivet (object of the industrial assembly). By using this relation, a manufacturing instruction for the assembly plan can be directly derived. Therefore, the manufacturing instruction "riveting" (object) with a required "pressure" (information object) can be derived and used to generate the corresponding manufacturing instruction in the assembly plan. Moreover, the attributes as used define a consistent form and/or structure that enables a computer-aided management, evaluation, and/or utilization.

In a further possible embodiment, the attribute of the information object comprises contact features for mechanically connecting the plurality of objects of the industrial assembly with each other. The contact features comprise information describing the connection and/or relation between several components (objects) of the industrial assembly to each other. In this way, advantageously, the required connection and/or relation information of all objects of the industrial assembly that are not available in a 2D-drawing can be provided within the three-dimensional model and can therefore be automatically verified and the corresponding manufacturing operation can be processed. For instance, the attribute can comprise the contact feature defining a clearance fit, an interference fit, or a transition fit. According to the attribute, the corresponding manufacturing operation is automatically selected. Furthermore, if the contact features define a weld seam or a clue seam, the corresponding weld or clue operation is selected. The contact features are defined in the objects and linked to the other objects of the assembly.

In a further possible embodiment, the generated assembly plan is stored in a database, database system, and/or in a distributed database. In this way, advantageously, the assembly plan can be provided to several manufacturing machines and/or manufacturing systems. Moreover, a database provides a more efficient capability for a multidimensional linking of data.

In a further possible embodiment, the generated assembly plan is provided by a communication module of the manufacturing machine to a person with interest in manufacturing the industrial assembly. In this way, advantageously, the assembly plan can be provided to a person, for instance, a manufacturer for observing the manufacturing process. The communication module may be connected to a communication device such as a computer, personal computer, monitor, terminal, display, touch-display, laptop, and/or handheld.

In a further embodiment the communication module is configured to receive data. The communication module may be connected to a communication device, such as a computer, personal computer, laptop, terminal, touch-display, and/or handheld, which can be used to provide input data for editing the generated assembly plan. A communication connection between the communication module and the communication device is established, for instance, by a wireless communication connection (e.g., WLAN, Wi-Fi, Bluetooth, NFC) and/or a wired communication connection (e.g., Ethernet, RS232, RS485).

In a further possible embodiment, the assembly manufacturing operations associated to the manufacturing machine are automatically linked to the detected assembly relevant features on the basis of corresponding manufacturing rules. The manufacturing rules are defined relations between manufacturing operations that can be performed by the manufacturing machine and the detected assembly relevant features. In this way, advantageously, the required manufacturing operations can be chosen efficiently and added to the assembly plan.

In a further possible embodiment, the assembly manufacturing tools associated to the manufacturing machine are automatically identified on the basis of assembly manufacturing information, design implementations of the industrial assembly, manufacturing process parameters, available assembly manufacturing tools, and/or available manufacturing resources. In this way, advantageously, the manufacturing tools required to perform the manufacturing operation related to the industrial assembly to be manufactured can be efficiently selected and added to the assembly plan.

According to a second aspect, the invention further provides a method for automatically generating a three-dimensional assembly model comprising the features of claim 11.

The invention further provides according to another aspect a method for automatically generating a three-dimensional assembly model of an industrial assembly for generating an assembly plan comprising manufacturing instructions to configure a manufacturing machine of a manufacturing system for manufacturing an industrial assembly, wherein the industrial assembly includes a plurality of objects, comprising the method steps of:
Identifying by a processing module of the manufacturing machine at least one object from the plurality of objects of the industrial assembly;
Supplying by the processing module of the manufacturing machine the at least one identified object;
Receiving by a communication module of the manufacturing machine at least one information object associated to the at least one identified object, and
Generating by the processing module of the manufacturing machine a three-dimensional assembly model by linking the at least one received information object to the associated supplied object.

The invention further provides according to a third aspect a manufacturing machine for automatically generating a three-dimensional assembly model comprising the features of claim 12.

The invention further provides according to another aspect a manufacturing machine for automatically providing a three-dimensional assembly model of an industrial assembly, for generating an assembly plan comprising manufacturing instructions to configure the manufacturing machine of a manufacturing system for manufacturing an industrial assembly, wherein the industrial assembly includes a plurality of objects, comprising:
a processing module adapted to identify at least one object of the plurality of objects of the industrial assembly and supplying the at least one identified object;
a communication module adapted to receive at least one information object associated to the at least one identified object, and wherein the processing module is further adapted to link the at least one received information object to the associated supplied object.

With the method and the manufacturing machine according to the aspects of the present invention, mentioned above, it is possible to provide directly a three-dimensional assembly model of an industrial assembly that comprises all required objects and information objects to generate automatically an assembly plan without creating manually a 2D-drawing of the industrial assembly. Therefore, the effort for manufacturing the industrial assembly is reduced. Moreover, the error-proneness is reduced since all required information are associative available to the industrial assembly (3D-assembly). A redundant 2D-drawing for generating an assembly plan as well as the updating process when changes in the 3D assembly occur is no longer required.

The invention further provides according to a fourth aspect a manufacturing system. The manufacturing system comprises at least one manufacturing machine according to claim 12 adapted to process the method steps of the method claims 1 to 10.

The invention further provides according to a fifth aspect a computer program product for selecting a communication device of a plurality of communication devices for communication packet processing comprising the features of claim 14.

In the fifth aspect the invention relates to a computer program product comprising a computer program, the computer program being loadable into a memory unit of a computing unit, including program code sections to make the computing unit execute the method for generating an assembly plan comprising manufacturing instructions according to the first aspect of the invention, when the computer program is executed in said computing unit.

The invention further provides according to a sixth aspect a computer-readable medium for selecting a communication device of a plurality of communication devices for communication packet processing comprising the features of claim 15.

In the sixth aspect the invention relates to a computer-readable medium, on which program code sections of a computer program are stored or saved, said program code sections being loadable into and/or executable in a computing unit to make the computing unit execute the method for generating an assembly plan comprising manufacturing instructions according to the first aspect of the invention, when the program code sections are executed in the computing unit.

The invention further provides according to a seventh aspect a computer program product for automatically generating a three-dimensional assembly model of an industrial assembly.

In the seventh aspect the invention relates to a computer program product comprising a computer program, the computer program being loadable into a memory unit of a computing unit, including program code sections to make the computing unit execute the method for automatically generating a three-dimensional assembly model of an industrial assembly according to the second aspect of the invention, when the computer program is executed in said computing unit.

The invention further provides according to an eighth aspect a computer-readable medium for automatically generating a three-dimensional assembly model of an industrial assembly.

In the sixth aspect the invention relates to a computer-readable medium, on which program code sections of a computer program are stored or saved, said program code sections being loadable into and/or executable in a computing unit to make the computing unit execute the method for automatically generating a three-dimensional assembly model of an industrial assembly according to the second aspect of the invention, when the program code sections are executed in the computing unit.

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures. In general, the figures are not for scale. It shall be understood that a preferred embodiment of the present invention can also be any combination of the dependent claims or above embodiments with the respective independent claim. Moreover, the embodiments defining the three-dimensional assembly model can be combined with the method for generating the three-dimensional assembly model.

These and other aspects of the invention will be apparent from and elucidated with reference to the embodiments described hereinafter.

In the following possible embodiments of the different aspects of the present invention are described in more detail with reference to the enclosed figures.
- Fig. 1: shows a schematic diagram of a first specific example for illustrating the operation of a method for generating an assembly plan;
- Fig. 2: shows a flowchart of a possible exemplary embodiment of a method for generating an assembly plan;
- Fig. 3: shows a flowchart of a possible exemplary embodiment of a method for automatically generating a three-dimensional assembly model of an industrial assembly;
- Fig. 4: shows a block diagram of a possible exemplary embodiment of a manufacturing machine for automatically providing a three-dimensional assembly model of an industrial assembly;
- Fig. 5: shows a block diagram of a possible exemplary embodiment of a manufacturing system;
- Fig. 6: shows a block diagram of a first possible exemplary embodiment of a three-dimensional assembly model of an industrial assembly;
- Fig. 7: shows a block diagram of a second possible exemplary embodiment of a three-dimensional assembly model of an industrial assembly;
- Fig. 8: shows a block diagram of a third possible exemplary embodiment of a three-dimensional assembly model of an industrial assembly.

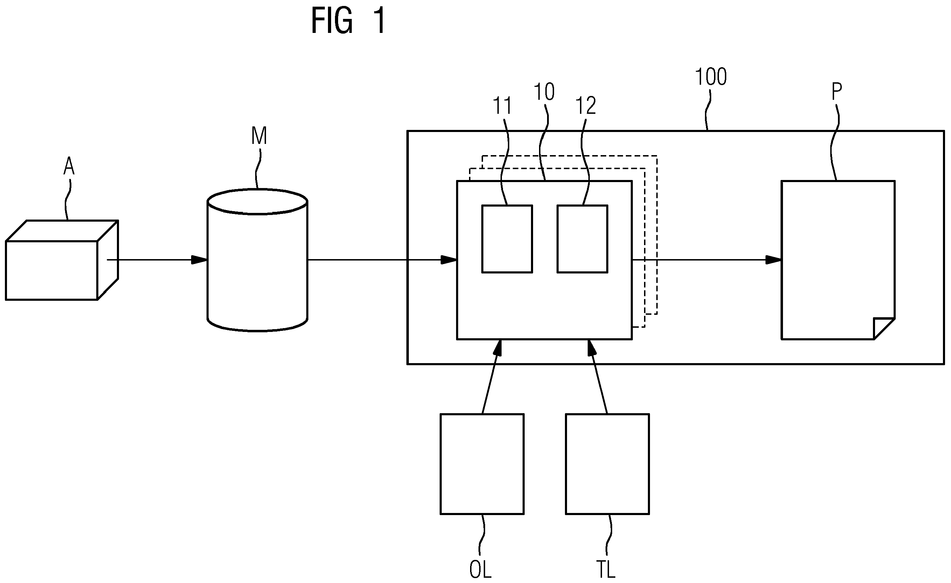

Fig. 1 schematically shows a diagram of a first specific example for illustrating the operation of a method for generating an assembly plan P.

In the illustrated exemplary embodiment according to Fig. 1, a manufacturing system 100 comprising a manufacturing machine 10 is shown. In an embodiment, the manufacturing system 100 comprises a plurality of manufacturing machines 10. The manufacturing machine 10 communicates via a communication connection (not shown) with the manufacturing system 100. The communication connection may comprise a wireless or a wired communication connection. The manufacturing machine 10 and/or the manufacturing system 100 are connected to a database, distributed database, or database system, which are configured to store the assembly manufacturing operation library OL and the assembly manufacturing tools library TL. The database can be stored in a memory unit of the manufacturing machine 10 or the manufacturing system 100. The memory unit can be understood as, for instance, a random-access memory (RAM) or a permanent memory such as a hard disk or a data carrier or, for instance, an exchangeable memory module. In an embodiment, the memory unit can be provided by a server or a cloud connected to the manufacturing machine 10 and/or manufacturing system 100.

The assembly manufacturing operation library OL comprises all relevant manufacturing operations that may be performed by the manufacturing machine 10 to manufacture the industrial assembly. The assembly manufacturing tools library TL comprises all manufacturing tools provided by the manufacturing machine 10 to perform manufacturing operations.

The manufacturing machine 10 comprises a communications module 11 and a processing module 12. In connection with the invention, a processing module 12 can be understood, for instance, as a machine or an electronic circuit. In particular, a processing module 12 can be a Central Processing Unit (CPU), a microprocessor or a microcontroller, for instance an application-specific integrated circuit or a digital signal processor, possibly in combination with a memory unit for storing program instructions. A processor may also be an IC (integrated circuit), especially an FPGA (field-programmable gate array) or an ASIC (application-specific integrated circuit), or for instance a multi-chip module, e.g. a 2.5D or 3D multi-chip module, in which in particular several dies are connected directly or via an interposer, or a DSP (Digital Signal Processor) or a GPU (Graphic Processing Unit). A processor can also be defined as a virtualized processor, a virtual machine or a soft CPU. For instance, it may also be a programmable processor equipped with configuration steps to perform the above-mentioned inventive method or configured with configuration steps such that the programmable processor realizes the inventive features of the method, component, module, or other aspects and/or partial aspects of the invention.

The manufacturing machine 10 may consist of several units (not shown), such as a manufacturing unit and a control unit (e.g., a computer, personal computer, server, a virtual instance running on a server or cloud), which may be placed in different areas. In particular, the control unit may be placed outside of the manufacturing machine 10 (as an external or separate unit) and provided with data communication means to the latter. The manufacturing unit and the control unit of the manufacturing machine may communicate via a wireless or wired communication connection with each other and/or with the manufacturing system 100. The manufacturing unit of the manufacturing machine 10 comprises the manufacturing tools and is adapted to perform the manufacturing operations for manufacturing the industrial assembly. The control unit of the manufacturing machine 10 comprises the communication module 11 and the processing module 12 and is adapted to perform the methods according to the first and second aspect of the present invention. Moreover, the control unit of the manufacturing machine 10 provides the control commands to control the manufacturing unit of the manufacturing machine 10. In connection with the invention, "control commands" can be understood to mean, for instance, a program or CNC command with which a tool is controlled (e.g. at which rotational speed a milling machine processes a workpiece) and/or with which tool or tool machine (e.g. milling machine, drill or 3D printer) the industrial assembly has to be manufactured.

The communication module 11 of the manufacturing machine 10 may receive the three-dimensional assembly model M for generating an assembly plan P to manufacture an industrial assembly. In an embodiment, the manufacturing machine 10, in particular, the control unit of the manufacturing machine 10 receives a 3D-assembly A of the industrial assembly to be manufactured to generate the assembly plan P for manufacturing the industrial assembly.

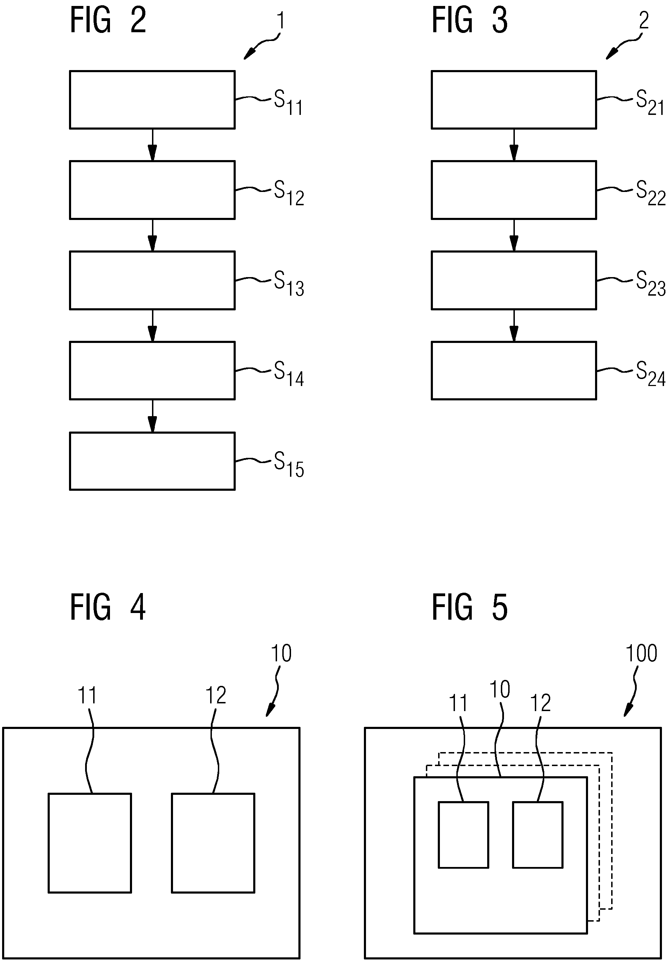

Fig. 2 shows a flowchart of a possible exemplary embodiment of a method 1 for generating an assembly plan.

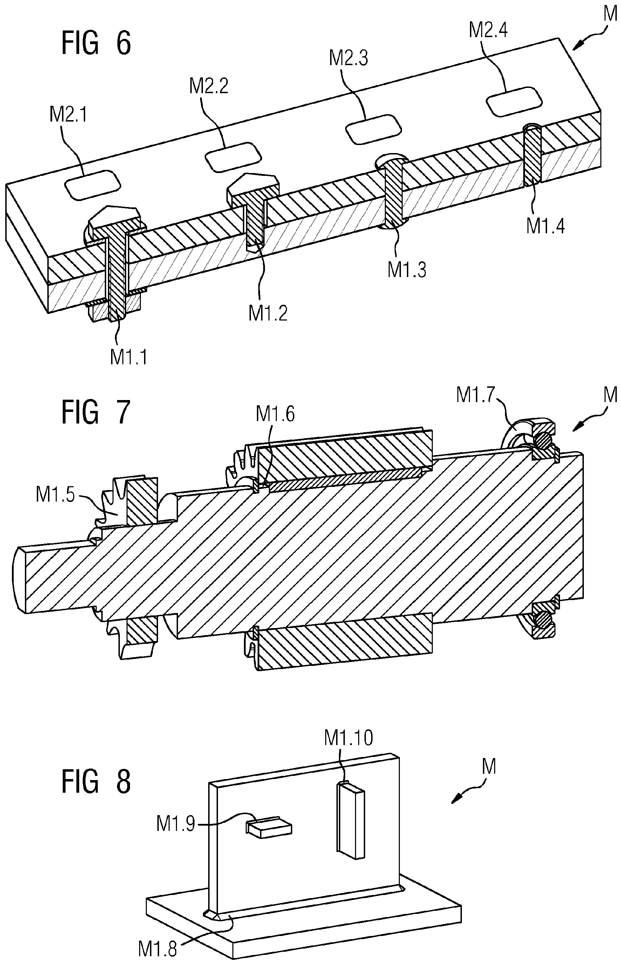

The method 1 in the illustrated exemplary embodiment comprises several main steps. In a first step S11 a three-dimensional assembly model M of an industrial assembly is received by a communication module 11 of the manufacturing machine 10 of the manufacturing systems 100 (see Fig. 1). The three-dimensional assembly model M comprises feature information of the industrial assembly. The feature information comprises objects M1.1-M1.10 (see Fig. 6 to Fig. 8) and information objects M2.1-M2.4 (see Fig. 6) of the industrial assembly to be manufactured as defined in the 3D-assembly A. In an alternative embodiment, the three-dimensional assembly model M has to be generated from the 3D-assembly A by a manufacturing machine 10, for instance, by the control unit of the manufacturing machine 10 of a manufacturing system 100. The information objects M2.1-M2.4 specify the features that contain manufacturing relevant information as well as symmetrical and none-symmetrical tolerances for contact features.

In a further step S12, assembly relevant features in a provided manufacturing bill of material are detected by a processing module 12 (see Fig. 1) of the manufacturing machine 10 of the manufacturing system 100. The manufacturing bill of material (MBOM) contains the components required to manufacture the industrial assembly. The MBOM comprising all information, (i.e., the product manufacturing information - PMI) and depends on the 3D-EBOM (Engineering Bill of Material). If no MBOM is available, the MBOM may be manually derived by the EBOM or on the basis of rules by additional information (e.g., site specific manufacturing machines or suppliers etc.). The assembly relevant features are, for instance, contact surfaces, threads, bearing seats etc.

In a further step S13, assembly manufacturing operations associated to the manufacturing machine 10 are linked to the detected assembly relevant features by the processing module 12 (see Fig. 1) of the manufacturing machine 10 of the manufacturing system 100. The assembly manufacturing operations are stored in an assembly manufacturing operation library OL provided by the manufacturing machine of the manufacturing system. The assembly manufacturing operations are linked based on pre-defined rules. The manufacturing operations such as clueing, welding, screwing, solding, fitting has to be defined as a type and linked with the detected features in the assembly manufacturing operation library OL. After or while selecting the correct manufacturing steps, the industrial assembly information and process parameters, which stored as the PMI in the three-dimensional assembly model M, are read out and automatically assigned to the manufacturing operation. A manufacturing step is a step or a partial operation within a manufacturing operation.

In a further step S14, assembly manufacturing tools associated to the manufacturing machine 10 are identified by the processing module 12 of the manufacturing machine from an assembly manufacturing tools library TL (see Fig. 1) provided by the manufacturing machine 10 on the basis of the assembly manufacturing operations linked to the detected assembly relevant features. In this step, the appropriate manufacturing tools, such as screwdriver, clue, hotplate etc., are automatically assigned. The library is defined by rules, which consider the industrial assembly manufacturing information, design features, and process parameter for the selection of the manufacturing operations, manufacturing tools and resources.

In a further step S15, an assembly plan P (see Fig. 1) comprising the manufacturing instructions to configure the manufacturing machine 10 of the manufacturing system 100 for manufacturing the industrial assembly by automatically assigning the feature information from the three-dimensional assembly model M to the identified assembly manufacturing tools for processing the assembly manufacturing operations is generated. As a result of step S15, a full defined manufacturing operation providing a time indication of the entire manufacturing process can be generated. Moreover, the step S15 may include a sorting process to sort all manufacturing operations.

In an alternative embodiment, the assembly plan may be displayed for a manufacturer, for instance, in combination with the three-dimensional assembly model and all information and instructions required for manufacturing of the industrial assembly, for instance, on a output device such as a monitor, a display, or a computer.

Fig. 3 shows a flowchart of a possible exemplary embodiment of a method 2 for automatically generating a three-dimensional assembly model of an industrial assembly.

The method 2 in the illustrated exemplary embodiment comprises several main steps. In a first step S21 at least one object M1.1-M1.10 (see Fig. 6) from the plurality of objects of the industrial assembly, in particular, of the 3D-assembly is identified by the processing module 12 of the manufacturing machine 10 of the manufacturing system 100 (see Fig. 1) is identified.

In a further step S22, the at least one identified object M1.1-M1.10 is supplied by the processing module 12 of the manufacturing machine 10. In this step, the identified 3D-assembly information of the industrial assembly to be manufactured are supplied. The 3D-assembly information (product management information - PMI) comprises assembly information, such as screw, rivet, and/or connection types, etc.

In a further step S23, at least one information object associated to the at least one identified object (M1.1-M1.10) is received by a communication module 11 (see Fig. 1) of the manufacturing machine. The information object M2.1-M2.4 (see Fig. 6) comprises clearance dimensions, tolerances and process- and manufacturing parameter such as temperature, time, and/or torque information.

In a further step S24, a three-dimensional assembly model M is generated by a processing module 12 of the manufacturing machine 10 by linking the at least one received information object to the associated supplied object. The linked product management information can be directly used in the following step for generating an assembly plan.

The three-dimensional assembly model M has the advantage that, for instance, the correct screwing driver for performing a manufacturing operation can be selected by using the information for the locked rotor torque provided within the three-dimensional assembly model. Moreover, the value of the locked rotor torque provided within the three-dimensional assembly model may be provided automatically to the screwing driver as a manufacturing tool of the manufacturing machine 10.

Fig. 4 shows a block diagram of a possible exemplary embodiment of a manufacturing machine 10 for automatically providing a three-dimensional assembly model M of an industrial assembly.

As it can be seen from the block diagram of Fig. 4, the manufacturing machine 10 is used for automatically providing a three-dimensional assembly model M of an industrial assembly that can be used for generating an assembly plan.

The manufacturing machine 10 comprises a processing module 12 adapted to identify at least one object of the plurality of objects of the industrial assembly and supplying the at least one identified object.

The manufacturing machine 10 further comprises a communication module 11 adapted to receive at least one information object associated to the at least one identified object.

The processing module 12 is further adapted to link the at least one received information object to the associated supplied object.

The manufacturing machine 10 may consist of a manufacturing unit and a control unit comprising the communication module 11 and the processing module 12. The manufacturing unit is adapted to perform the manufacturing operation for manufacturing the industrial assembly and comprises the manufacturing tools. The control unit can be a computer, personal computer, or a virtual instance processed on a server or in a cloud. In particular, the control unit may be placed outside of the manufacturing machine 10 (as an external or separate unit) and may be provided with data communication means to the latter. The control unit and the manufacturing unit communicate via a communication connection comprising a wireless or wired communication connection over a communication network. In an alternative embodiment, the control unit and the manufacturing unit are established as a single unit.

Fig. 5 shows a block diagram of a possible exemplary embodiment of a manufacturing system 100.

In Fig. 5 a manufacturing system 100 comprising at least one manufacturing machine 10 is shown. In an embodiment, the manufacturing system 100 comprises a plurality of manufacturing machines 10. The manufacturing system 100 communicates with manufacturing machines 10 via a communication connection (not shown). The manufacturing system 100 comprises means that are configured to select the correct manufacturing machine 10 or manufacturing machines 10 of the plurality of manufacturing machines 10, which fulfill the requirements to manufacture the industrial assembly according to the three-dimensional assembly model M.

Fig. 6 shows a block diagram of a possible exemplary embodiment of a three-dimensional assembly model M of an industrial assembly.

In Fig. 6 a three-dimensional assembly model M comprising several and different manufacturing relevant information. The three-dimensional assembly model M comprises four different objects M1.1-M1.4. The object M1.1 defines a screw connection, in particular a thru-hole. The object M1.2 defines a screw connection, in particular a blind hole. The object M1.3 defines a rivet connection and the object M1.4 defines a pin connection. Each object M1.1-M1.4 of the three-dimensional assembly model is linked to an information object (M2.1-M2.4). Information object M2.1 may comprise attributes specifying the thru-hole as defined in object M1.1, for instance specifying the type of screw, the diameter of the screw, and/or the tightening torque for screwing the screw. Information object M2.2 may comprise attributes specifying the blind hole as defined in object M1.2, for instance specifying the type of screw, the diameter of the screw, and/or the tightening torque for screwing the screw. Information object M2.3 may comprise attributes specifying the rivet connection as defined in object M1.3, for instance specifying the type of rivet, the diameter of the rivet, and/or the riveting pressure for riveting. Information object M2.4 may comprise attributes specifying the pin connection as defined in object M1.4, for instance specifying the type of pin and/or the diameter of the pin. Each information object M2.1-M2.4 may comprise a reference information. The information provided within the three-dimensional assembly model may be used to select the correct manufacturing tool for performing a manufacturing operation.

Fig. 7 shows a block diagram of a second possible exemplary embodiment of a three-dimensional assembly model of an industrial assembly.

In Fig. 7 a three-dimensional assembly model M comprising several different connection types. The three-dimensional assembly model M comprises three different objects M1.5-M1.7. The object M1.5 defines a force fit connection between the gear and the shaft. The object M1.6 defines a tight fit connection with feather key between the gear and the shaft. The object M1.7 defines a force fit connection between the coil and the ball bearing. By providing the contact features within the three-dimensional assembly model M, the method 1 according to the first aspect of the present invention may decide which type of clearance is used. The corresponding manufacturing operation can be automatically selected. In an embodiment, the objects M1.5-M1.7 can be linked to information objects for providing further information.

Fig. 8 shows a block diagram of a third possible exemplary embodiment of a three-dimensional assembly model of an industrial assembly.

In Fig. 8 a three-dimensional assembly model M comprising several types and information specifying the joining process. The three-dimensional assembly model M comprises three different objects M1.8-M1.10. The object M1.8 defines a welded joint. The object M1.9 defines a solder connection. The object M1.10 defines an adhesive joint. If a weld joint, a bond seam, and/or a soldered joint is determined as an assembly relevant feature, a corresponding welding, - solder, - or adhesive operation with appropriate manufacturing machines, assembly manufacturing tools are selected and the required parameters are defined. In an embodiment, the objects M1.8-M1.10 can be linked to information objects for providing further information.

In summary, the invention relates to a method for generating an assembly plan comprising manufacturing instruction to configure a manufacturing machine of a manufacturing system for manufacturing an industrial assembly. The method receives a three-dimensional assembly model that comprises feature information of the industrial assembly. The feature information may be automatically assigned to manufacturing tools, which are identified on the basis of assembly manufacturing operations. The invention further relates to a method and apparatus for generating the three-dimensional assembly model. The three-dimensional assembly is generated by linking objects of the 3D-assembly with information objects specifying the objects.

Due to the present invention, the effort for generating an assembly plan for manufacturing an industrial assembly is reduced. Moreover, a three-dimensional assembly model comprising all information for generating the assembly plan can be generated without providing 2D-assembly drawing of the industrial assembly.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantageous which are described with respect to a particular embodiment of present invention or with respect to a particular figure are, wherever applicable, also advantages of other embodiments of the present invention.

### Reference numerals

- 1: method for generating an assembly plan
- 2: method for generating a 3D assembly model
- 10: manufacturing machine
- 11: communication module
- 12: processing module
- 100: manufacturing system
- A: 3D-assembly
- M: three-dimensional assembly model
- M1.1-M1.10: objects
- M2.1-M2.4: information object
- OL: assembly manufacturing operation library
- P: assembly plan
- TL: assembly manufacturing tools library
- S11-S15: method steps
- S21-S24: method steps

## Claims

1. A method (1) for generating an assembly plan (P) comprising manufacturing instructions to configure a manufacturing machine (10) of a manufacturing system (100) for manufacturing an industrial assembly, wherein the industrial assembly includes a plurality of objects, comprising the method steps of:
- Receiving (S11) by a communication module (11) of the manufacturing machine (10) of the manufacturing systems (100) a three-dimensional assembly model (M) of an industrial assembly, wherein the three-dimensional assembly model (M) comprises feature information of the industrial assembly;
- Detecting (S12) by a processing module (12) of the manufacturing machine (10) assembly relevant features in a provided manufacturing bill of material, wherein the manufacturing bill of material contains the components required to manufacture the industrial assembly;
- Linking (S13) by the processing module (12) of the manufacturing machine (10) automatically assembly manufacturing operations associated to the manufacturing machine (10) to the detected assembly relevant features, wherein the assembly manufacturing operations are stored in an assembly manufacturing operation library (OL) provided by the manufacturing machine of the manufacturing system;
- Identifying (S14) by the processing module (12) of the manufacturing machine (10) assembly manufacturing tools associated to the manufacturing machine (10) from an assembly manufacturing tools library (TL) provided by the manufacturing machine (10) on the basis of the assembly manufacturing operations linked to the detected assembly relevant features, and
- Generating (S15) an assembly plan (P) comprising the manufacturing instructions to configure the manufacturing machine (10) of the manufacturing system (100) for manufacturing the industrial assembly by automatically assigning the feature information from the three-dimensional assembly model (M) to the identified assembly manufacturing tools for processing the assembly manufacturing operations.

2. The method (1) according to claim 1, wherein the three-dimensional assembly model (M) comprises the plurality of objects (M1.1- M1.10) of the industrial assembly and at least one information object (M2.1, M2.2, M2.3, M2.4) associated to the at least one object of the plurality of objects of the industrial assembly.

3. The method (1) according to claim 2, wherein the at least one information object (M2.1, M2.2, M2.3, M2.4) is directly linked to at least one object of the plurality of objects (M1.1-M1.10) of the industrial assembly.

4. The method (1) according to claim 3, wherein the information object (M2.1, M2.2, M2.3, M2.4) is directly linked to the surface of the object (M1.1-M1.10) of the industrial assembly.

5. The method (1) according to any of the preceding claims 2 to 4, wherein the information object (M2.1, M2.2, M2.3, M2.4) comprises at least one attribute.

6. The method (1) according to claims 5, wherein the attribute of the information object (M2.1, M2.2, M2.3, M2.4) comprises a reference information to the at least one object of the plurality of objects (M1.1-M1.10) of the industrial assembly associated to said information object.

7. The method (1) according to any of the preceding claims 5 and 6, wherein the attribute of the information object (M2.1, M2.2, M2.3, M2.4) comprises information of the industrial assembly and/or process parameters and/or construction parameters of the industrial assembly.

8. The method (1) according to any of the preceding claims 5 to 7, wherein the attribute of the information object (M2.1, M2.2, M2.3, M2.4) comprises contact features for mechanical connecting the plurality of objects (M1.1-M1.10) of the industrial assembly with each other.

9. The method (1) according to any of the preceding claims, wherein the assembly manufacturing operations associated to the manufacturing machine (10) are automatically linked to the detected assembly relevant features on the basis of corresponding manufacturing rules.

10. The method (1) according to any of the preceding claims, wherein the assembly manufacturing tools associated to the manufacturing machine (10) are automatically identified on the basis of assembly manufacturing information, design implementations of the industrial assembly, manufacturing process parameters, available assembly manufacturing tools, and/or available manufacturing resources.

11. A method (2) for automatically generating a three-dimensional assembly model (M) of an industrial assembly for generating an assembly plan comprising manufacturing instructions to configure a manufacturing machine (10) of a manufacturing system (100) for manufacturing an industrial assembly, wherein the industrial assembly includes a plurality of objects, comprising the method steps of:
- Identifying (S21) by a processing module (12) of the manufacturing machine (10) at least one object from the plurality of objects of the industrial assembly;
- Supplying (S22) by the processing module (12) of the manufacturing machine (10) the at least one identified object;
- Receiving (S23) by a communication module (11) of the manufacturing machine (10) at least one information object associated to the at least one identified object, and
- Generating (S24) by the processing module (12) of the manufacturing machine (10) a three-dimensional assembly model (M) by linking the at least one received information object to the supplied associated object.

12. A manufacturing machine (10) for automatically providing a three-dimensional assembly model (M) of an industrial assembly, for generating an assembly plan comprising manufacturing instructions to configure the manufacturing machine (10) of a manufacturing system (100) for manufacturing an industrial assembly, wherein the industrial assembly includes a plurality of objects, comprising:
- a processing module (12) adapted to identify at least one object of the plurality of objects of the industrial assembly and supplying the at least one identified object;
- a communication module (11) adapted to receive at least one information object associated to the at least one identified object, and wherein
- the processing module (12) is further adapted to link the at least one received information object to the associated supplied object.

13. A manufacturing system (100) comprising at least one manufacturing machine (10) according to claim 12 adapted to process the method steps of the preceding method claims 1 to 10.

14. A computer program product comprising program elements which induce an electronic device to carry out the steps of the method for generating an assembly plan comprising manufacturing instructions according to one of the preceding method claims, when the program elements are loaded into a memory of the electronic device.

15. A computer-readable medium on which program elements are stored that can be read and executed by an electronic device in order to perform steps of the method for generating an assembly plan comprising manufacturing instructions according to one of the preceding method claims, when the program elements are executed by the electronic device.
